# EUROPEAN PATENT APPLICATION

(11) **EP 2 921 988 A1**
(43) Date of publication of application: **23.09.2015**
(21) Application number: 14160900.8
(22) Date of filing: 20.03.2014
(51) Int. Cl.: G06K 7/08, G06K 7/10, G07C 1/24

(54) **Sports timing system**

(71) Applicant: MyLaps B.V., 2012 PJ Haarlem (NL)
(72) Inventor: Gerritsen, Reinerus Mathijs Willie, 2012 PJ Haarlem (NL); Immerzeel, Frank Johannes Christiaan, 2012 PJ Haarlem (NL); Six, Mark, 2012 PJ Haarlem (NL)
(74) Representative: Haartsen, Jan Pieter

(57) **Abstract**

A sports timing detection system and sports timing detection elements are proposed based on backscattering modulation, preferably RFID backscattering modulation in the UHF band. The detection element comprises at least one antenna, a receiver circuitry, a transmitter circuitry and a microprocessor. The microprocessor is configured to activate the transmitter circuitry for transmitting a carrier signal via the at least one antenna and process a backscatter signal received via the at least one antenna and the receiver circuitry in response to the carrier signal. The detection element further comprising a data bus for exchanging data with a further detection element. Thus, effectively the RFID reader is integrated inside each detection element and the data bus, preferably a serial data bus, connects the detection elements in an array of detection elements.

## Description

### FIELD OF THE INVENTION

The present invention relates to sports timing. More particularly, the invention relates to sports timing detection elements and a sports timing system comprising the detection elements based on backscattering modulation.

### BACKGROUND

Radio Frequency Identification (RFID) tags are widely used in automatic time registration systems in sporting events. Typically an RFID tag comprises a microchip combined with an antenna and is structured to allow attachment to an object to be detected. In such time registration systems every participant of a sporting event is provided with an RFID tag, which is removable secured to e.g. a shoe or a bib comprising a number, which is associated with the name and/or address of the participant. If a participant crosses a detection antenna an electro-magnetical coupling between the tag and the detection antenna is established thereby allowing information exchange, e.g. an identify number associated with the tag, between the tag and a detector connected to the detection antenna.

Tags may be so-called ultra-high frequency (UHF) tags, which use frequency in the UHF band between approximately 860 and 960 MHz. These tags are relatively cheap (so that they can be used as a one-time use disposable tag), are relatively light-weighted, and can be read faster and from larger distances when compared with low frequency tags.

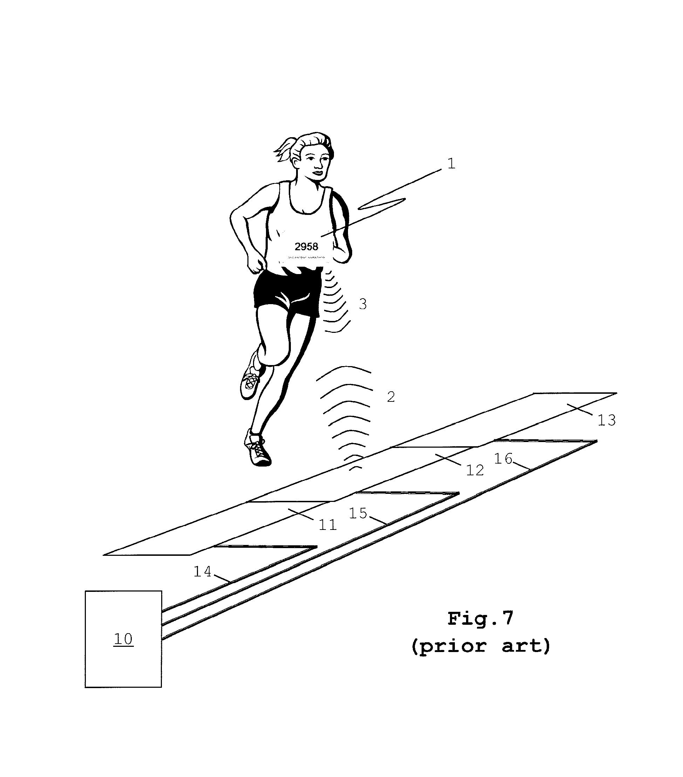

In sporting events such as bicycle races, marathons and triathlons a detection antenna is typically implemented as a detection mat placed on the ground, such as shown in Fig.7. Such detection mat 11,12,13 is typically connected to an RFID reader 10 at the side of the track. The RFID tag 1 of the participant is detected when the participant 1 crosses the detection mat 12. Hereto a carrier signal 2 is transmitted by an antenna in the detection mat 12 and in response thereto a backscatter signal 3 is transmitted by the RFID tag 1 and detected by the antenna in the detection mat 12. The detection antennas ideally cover the width of the track to enable detection of all participants when crossing e.g. the start line or finish line. As a single detection mat has a limited width, e.g. a width of 1 meter, multiple detection mats 11,12,13 are typically placed in one or two parallel lines across the width of the track. In this configuration the antenna mats 11,12,13 are connected to the RFID reader 10 via coax lines 14,15,16, respectively.

Existing detection mats, such as used at start lines and finish lines of sporting events, are typically remote antennas coupled to a central RFID reader via coax lines. There are several disadvantages of such configuration.

Firstly, with each antenna mat being connected to the central RFID reader at the side of the track, relatively long cables are needed to connect each antenna to the reader, resulting in a signal loss (the longer the cable, the higher the signal loss).

Secondly, installation of the detection mats can be time consuming, while the available installation time is typically limited. Installation can be time consuming because each cable has to be carefully installed, such that participants cannot damage the cables e.g. by stepping on it. Hereto the cables are typically installed in cable ducts, possibly embedded in the detection mats. Installation time, on the other hand, is often limited because public roads temporary used for a sporting event are to be closed as late as possible.

Thirdly, because coax cables are rigid they are difficult to handle. One has to be careful not to bend the cables beyond damaging point. Furthermore, coax cable connectors are vulnerable to dirt and mechanical damages.

Fourthly, the maximum number of connected detection mats is typically limited (e.g. to a maximum of eight) by the space occupied by the coax cables in the cable ducts.

US 20010/0265801 discloses a timing system having multiple detection mats placed on the ground, wherein each antenna mat is connected to a control, detection and timing circuitry (i.e. including the RFID reader) via a cable. The detection mats include conduits to accommodate the cables coming from the detection mats. When installing the detection mats, the cables have to be carefully placed into the conduits and connected to the RFID reader at the side of the track. This task is time consuming and prone to incorrect connection of one or more mats to the RFID reader.

There is a need for improved sports timing detection elements for detecting tags in sporting events such as bicycle races, marathons and triathlons, which are easier to install.

### SUMMARY OF THE INVENTION

The present invention provides an improved sports timing detection element, particularly suitable for use in sporting events such as bicycle races, marathons and triathlons. The improved sports timing detection element may be implemented as a detection mat for use on the ground, as a vertical detection element or as an overhead detection element. Multiple detection elements are easily interconnectable to increase the detection width of the detection elements, for example to cover the width of a track at a start line or finish line.

According to a first aspect of the invention a sports timing detection element based on backscattering modulation is proposed. The backscatter modulation is for example based on RFID backscattering modulation in the UHF band. The detection element can comprise at least one antenna, a receiver circuitry, a transmitter circuitry and a microprocessor. The microprocessor can be configured to activate the transmitter circuitry for transmitting a carrier signal via the at least one antenna. The microprocessor can further be configured to process a backscatter signal received via the at least one antenna and the receiver circuitry in response to the carrier signal. The detection element can further comprise a data bus for exchanging data with a further detection element.

The data bus enables the detection element to be easily connected to another detection element. Because a data bus is used, there is no need to have individual cables from each detection element, e.g. to an external controller device. Instead, the data busses of the detection devices may be interconnected to create a single (i.e. serial) data bus along the detection elements when interconnected. Another advantage of the data bus is that the cables used for connecting the detection elements to for example the external controller device need not be rigid and are less susceptible to external damage. With the data busses interconnecting to form a single data bus when the detection elements are connected, there is no need for having long cables from each detection element to for example the external controller device.

The microprocessor in the detection element processes the backscatter signal. The thus obtained data can be transmitted via the data bus to another detection element or to an external controller device (possibly via another detection element). The microprocessor is for example a processor running a computer program stored in a memory (e.g. NVRAM or ROM). Another example of a microprocessor is a Field Programmable Gate Array (FPGA) that is hardcoded with the computer program code.

An example of a data bus is a Controller Area Network (CAN) bus. Via the CAN bus data may be exchanged between detection elements and between a detection element and for example an external controller device. Another example of a data bus is a RS485 bus. The external controller device is for example a computer used for collecting the data from the detection elements. This data, which is obtained by the microprocessor in the detection element after processing the backscatter signal from a tag, typically includes sports timing information of the participants of the sporting event. The external controller may also be used to synchronize detection elements when interconnected, e.g. by switching one or more interconnected detection elements on or off to reduce interference between the detection elements. Such synchronization may alternatively be achieved by having the detection elements exchange synchronization data directly, i.e. without involving an external controller device.

Advantageously, by locally processing the backscatter signal, i.e. in the detection element/detection mat, the distance between the antenna and the processor is relatively short compared to the length of the coax cables between the antennas and the RFID reader in Fig.7. Potential signal losses between the antenna and the processor are thereby minimal. The detection element may have one or more connectors for interconnecting the data bus of one detection element with the data bus of another detection element, thereby forming a single data bus extending the interconnected detection elements. The connectors may be located at a fixed location in a protective casing of the detection element, the protective casing forming e.g. a detection mat. Making a connection between the detection elements by connecting the connectors is straightforward and thus less time consuming compared to e.g. the configuration of Fig.7 wherein cables have to be installed. The data bus may be embedded in the detection element or its protective casing such that, contrary to the installation of the coax cables in Fig.7, there is a very low chance of damage during installation of the detection elements for a sporting event.

In an embodiment the detection element further comprises a polarization switch to switch the polarization of an antenna, such as between a horizontal polarization and a vertical polarization or between a linear and a circular polarization.

Switching of the polarization enables better detection of backscatter signals with tags being positioned differently on the participants. For example a tag that is positioned horizontally on a bib worn on the chest can be optimally detected with a horizontally polarized detection antenna in a detection mat placed on the ground. A vertically positioned tag on a bib or participant can be optimally detected by a vertically polarized detection antenna in a detection mat that is placed on the ground or vertically oriented (i.e. allowing the participant to pass the antenna mat from the side). By enabling the polarization to be switched, the detection element may be used in both setups, and possibly others.

In an embodiment the detection element comprises a first antenna and a second antenna. The detection element can be configured to transmit the carrier signal via the first antenna and to receive the backscatter signal via the second antenna.

Separation of the transmitting and receiving via separate antenna results in a better reception of the backscatter signal, because there is less interference between the carrier signal and the backscatter signal with separated antennas.

In an embodiment the detection element further comprises a cross-over switch to switch between the first antenna and the second antenna for transmitting the carrier signal.

This is for example useful when a detuning is detected on the transmitter antenna, e.g. due to a participant standing or stepping on the transmitter antenna. By switching to another antenna the detected detuning effect may be reduced or avoided, typically because the chance that the participant is standing on both antennas at the same time is low.

In an embodiment the detection element is configured to receive the backscatter signal via the first antenna and the second antenna.

This can improve the detectability of the backscatter signal in the detection element in case the strength of the backscatter signal is too low at one of the antennas to be detected.

In an embodiment the detection element further comprises a comparator module configured to compare a first reflection signal received via the first antenna with a second reflection signal received via the second antenna to obtain a comparison result. The microprocessor can be further configured to, based on the comparison result, switch off one of the first antenna and the second antenna for transmitting the carrier signal. The microprocessor can be further configured to, based on the comparison result, lower a transmission power for transmitting the carrier signal via one of the first antenna and the second antenna.

For example due to an antenna mismatch, a reflection of the carrier signal may be detected on the antenna ports. This reflection is called a reflection signal. The comparator is used to determine if the reflection signal is larger at one of the two antennas. The comparison result may then be used to switch off the antenna with the highest reflection signal. The first and second reflection signals may originate from the same carrier signal.

If the power of the reflection signal is too large, the backscatter signal may not be detectable. Lowering the transmission power for transmitting the carrier signal may reduce or eliminate the reflection signal, enabling the backscatter signal to be detectable again. The lowering of the transmission power may be a temporary measure.

In an embodiment the detection element further comprises a microcontroller that is configured to determine an identity of the detection element.

The microcontroller is typically implemented as a small computer on a single integrated circuit containing a processor core, a memory and programmable input/output peripherals. The microprocessor may be a part of the microcontroller. The microprocessor and the processor core of the microcontroller may be one and the same.

The microprocessor is typically configured to process the backscatter signal and control the receiver antenna and transmitter antenna. The microcontroller typically interfaces between the microprocessor and the data bus and is typically involved in the communication with other detection elements and/or an external controller device. The microcontroller can set, obtain, detect or otherwise determine the identity of the detection element, which identity may be transmitted along with the data on the data bus.

In an embodiment the data bus comprises one or more power lines. The microcontroller can be configured to determine the identity based on a measurement result obtained by measuring the one or more power lines.

A line is typically implemented as a copper conductor with isolating cover, e.g. implemented on a circuit board or as a copper wire. The power lines can provide the electronics of the detection element with power. The power may originate from an external controller device or any other external power source that is connected to the data bus. Typically the power line is separated from the data line, although it is possible to have a power line and the data line combined in a single line.

When multiple detection elements are interconnected, electrical fluctuations or an electrical state of the power line(s) caused by the interconnection may be measured. The measurement results can be characteristic of for example a position of the detection element in a series of interconnected detection elements.

In an embodiment the detection element comprises a first power line, wherein the measuring comprises detecting a voltage drop over a resistor in the first power line.

The first power line may be used for determining for example a position of the detection element in a series of interconnected detection elements. The power on the first power line may fluctuate or be different between detection elements.

In an embodiment the detection element further comprises a second power line. The microcontroller can be configured to receive substantially a fixed power via the second power line for powering the detection element. The detection element can be part of an array of serially connected detection elements that are interconnected via the data bus. The microcontroller can be configured to determine a number of detection elements in the array based on the voltage drop and the voltage of the fixed power.

The second power line may be used to provide a fixed power to the electronics of the detection element. When detection elements are interconnected, the power on the second power line is substantially the same for all detection elements. The voltage drop on the first power line can be related to the power on the second power line to determine how many detection elements are interconnected by the data bus. This may for example be achieved by a resistance on the first power line in the detection element, causing the power to drop on the first power line with each detection element in a series of detection elements. The number of detection elements is for example determined by dividing the fixed power on the second power line by the amount of power drop caused by the resistance on the first power line.

In an embodiment the detection element is placed in a protective casing to form one of a sports timing detection mat, a vertically oriented sports timing detection element and an overhead sports timing detection element.

In this configuration the detection element is particularly suitable for outdoor use. The detection element may thus be protected from weather conditions and from damage by contact with participants (e.g. by stepping on the detection element when placed on the ground at a start line or finish line). Detection mats may be interconnectable by interconnecting the protective casings, thus preventing the detection mats to separate. Furthermore or alternatively the data busses, including the power lines if available, of the detection elements are typically interconnectable by a socket-and-plug type of connection, possibly with a socket being provided in the protective casing. When interconnected, the detection elements in their protective casings may be connected such that no open space exists between the detection elements. Alternatively a small space may be present, in which case a (serial) cable connects the data busses of the detection elements in their protective casings.

According to a second aspect of the invention an array of two or more sports timing detection elements is proposed. The detection elements comprise the features as defined in one or more of the embodiments above (either from the first aspect or the alternative aspect of the invention). Two detection elements can be connected via the data bus. The data busses together preferably form a serial data bus.

Thus, multiple detection elements are easily interconnectable to increase the detection width of the detection elements, for example to cover the width of a track at a start line or finish line.

In an embodiment a detection element is configured to switch off the transmitter circuitry of said detection element based on a signal received from another detection element.

When detection elements are part of an array, for example adjacent detection elements may thus reduce interference by having one of the adjacent detection elements (possibly temporarily) switching off the transmitter circuitry. The signal may be transmitted via the data bus. Alternatively the signal is transmitted wirelessly between the detection elements using any suitable transmission protocol (e.g. based on RFID, Bluetooth or NFC). In the latter alternative the detection element typically includes a further transmitter and receiver circuitry for implementing the wireless communication between the detection elements.

According to a third aspect of the invention a sports timing detection system is proposed. The sports timing detection system comprises the array of sports timing detection elements as defined in one or more of the embodiments above. The detection system further comprises the controller device connected to one of the detection elements in the array via the data bus of the one of the detection elements.

Thus, a sports timing detection system may be realized, including interconnecting detection elements forming an array of detection elements and including an external controller device for collecting e.g. the sports timing data obtained by the detection elements. The controller device is typically located at the side of a track and connects to one of the detection elements in the array via the data bus.

In an embodiment the controller device is configured to switch on or switch off one or more detection elements in the array.

Thus, in case of for example an expected or detected interference between two detection elements, the controller device may switch on or off a detection element (or a transmitter circuitry in the detection element). The data bus may be used to send a signal with instructions to the detection element that is to be switched on or off.

In an embodiment the controller device is configured to set the transmission frequency of the carrier signal of one or more of the detection elements in the array.

This enables for example two adjacent detection elements to use different frequencies for transmitting the carrier signal (consequently resulting in different frequencies for the corresponding backscatter signal). This may reduce or eliminate an expected or detected interference between two detection elements. The data bus may be used to send a signal with instructions to the detection element to use a particular carrier frequency.

In an embodiment the detection system further comprising a power supply for providing power to the array via the data bus, wherein the power supply is a part of the controller device or otherwise externally connected, or a part of one or more of the sports timing detection elements in the array.

This enables the detection system to include the power source for powering the electronics of the detection elements in the array. With the power being provided via the data bus, typically via one or more power lines in the data bus, only one of the detection elements in the array needs to be physically connected to the power supply.

Hereinafter, embodiments of the invention will be described in further detail. It should be appreciated, however, that these embodiments may not be construed as limiting the scope of protection for the present invention.

### BRIEF DESCRIPTION OF THE DRAWINGS

Aspects of the invention will be explained in greater detail by reference to the drawings, in which:
Fig.1 shows a sports timing detection system of an exemplary embodiment of the invention;
Fig.2 shows different exemplary orientations of a detection element of an exemplary embodiment of the invention;
Fig.3 and Fig.4 show detection elements of exemplary embodiments of the invention;
Fig.5 shows a cross-over switch part of a detection element of an exemplary embodiment of the invention;
Fig.6 shows a polarization switch of an exemplary embodiment of the invention; and
Fig.7 shows a prior art sports timing detection system.

### DETAILED DESCRIPTION

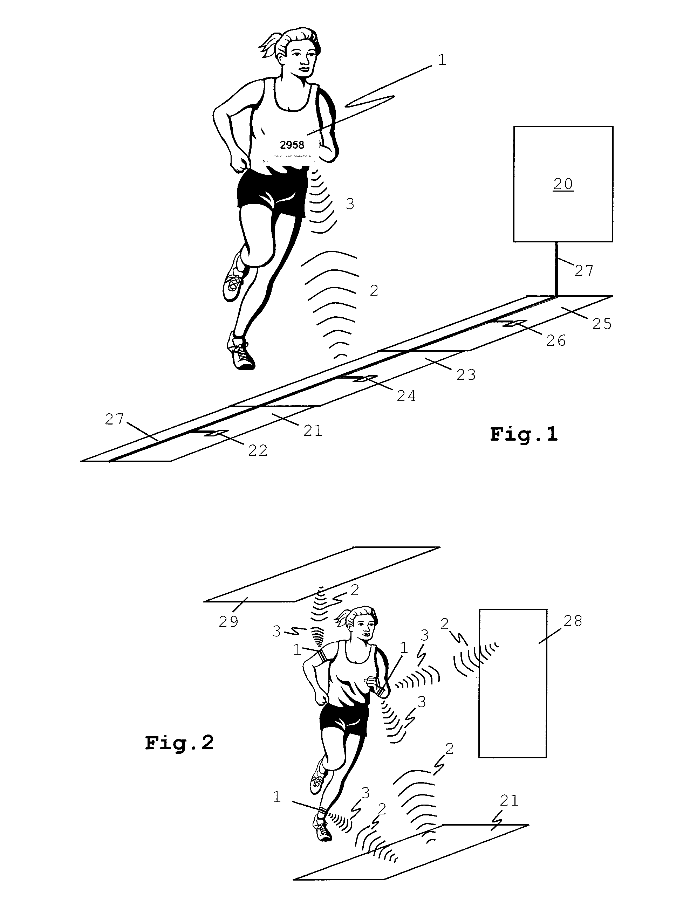

The sports timing detection element of the present invention may be used in sporting events such as bicycle races, marathons and triathlons. Fig.1 shows an exemplary embodiment wherein the detection element 21,23,25 is implemented as a detection mat placed on the ground. As a single detection mat typically has a limited width, e.g. a width of 1 meter, multiple detection mats are typically placed in one or two parallel lines across the width of the track forming an array of detection elements. In Fig.1 three detection mats are shown as an example. Any other number of detection elements or detection mats may be used instead. Each detection element 21,23,25, may be provided with a processor 22,24,26 for controlling a carrier signal 2 and processing a backscatter signal 3 received in response from a tag 1 of a participant. The corresponding antenna or antennas are not shown in Fig.1. Effectively, each detection element 21,23,25 has embedded RFID reader functionality. The detection elements 21,23,25 are interconnected by a data bus 27 for exchanging data, e.g. between the processors 22,24,26 and/or with an external controller device 20. The external controller device 20 may be used for storing data transmitted from the detection elements 21,23,25 via the data bus 27.

The timing system shown in Fig.1 includes a bib-tag assembly 1 and one or more detection antennas (not shown) in one or more detection elements 21,23,25 that may be configured as an elongated antenna mat placed on the ground, in the path of travel of the athletes wearing the bib-tags. The antenna mat typically comprises one or more antennas configured to pick up signals transmitted by the bib-tag assembly 1. The tag 1 may be configured as a passive backscatter system wherein the tag 1 transmits a modulated tag signal as a backscatter signal 3 to the detection antenna in a detection element 21,23,25 in response to a modulated trigger signal in a carrier signal 2 from the antenna mat. If a participant wearing the bib-tag assembly 1 comes in the vicinity of the detection antenna, the tag antenna may receive the modulated trigger signal 2 from the detection antenna mat, which is used to power-up a processor in the tag 1. The detection antenna mat typically transmits the modulated trigger signal 2 in a direction opposite to the direction in which the athlete wearing the bib-tag 1 is moving. In response to the modulated trigger signal 2, the tag transmits information stored in the processor back to the detection antenna on the basis of a modulating back-scattered signal 3. This way, the tag 1 may start sending out messages including e.g. a unique ID identifying the bib. The detection antenna may pick the transmitted messages and transfer them to the processor 22,24,26 in the detection element 21,23,25 for executing an algorithm for determining a time associated with the tag on the basis of time of detection and the signal strength of the received messages. The processed data may be subsequently put on the data bus 27 and e.g. stored in a storage, e.g. a database, in the controller device 20 connected to the data bus 27.

Because the backscatter signal is processed locally in the detection element 21,23,25 by the embedded processor 22,24,26, a remote RFID reader, such as RFID reader 10 in Fig.7, need not be used and the antennas in the detection elements need not each be connected to the remote RFID reader 10 via coax lines 14,15,16, such as shown in Fig.7. The processor 22,24,26 locally processes the backscatter signal 3 and the thereby obtained sports timing data, possibly including identification data of the participant and timing information, may be provided to the data bus 27. Any device connected to the data bus 27 may use the data for whatever purpose, such as the external controller device 20 for storing the data or another detection element in the array of detection elements.

The number of detection elements in the array is virtually unlimited, as there are e.g. no coax cables to install in cable ducts as in Fig.7. Each detection element may simply be connected to another detection element.

The use of the detection elements is not limited to the detection mats as shown in Fig.1. The detection elements may be positioned in different orientations. Fig.2 shows three exemplary orientations. Detection element 21 may be placed in a protected casing to form a detection mat. A detection mat may be advantageous when the tag 1 is located closer to and/or in an orientation towards the ground, such as when worn on the ankle or at the wrist. Detection element 28 may be placed in a protective casing to form a vertically oriented sports timing detection element. A vertically oriented detection element may be advantageous when the tag 1 is located closer to and/or in an orientation towards a side of the track, such as when worn on the wrist. Furthermore, a vertically orientation keeps the track free of obstacles (i.e. detection mats on the ground form small bumps), which is preferable in sporting events such as skiing or cycling. Detection element 29 may be placed in a protective casing to form an overhead sports timing detection element. An overhead detection element may be advantageous when the tag 1 is located higher on the participant and/or in an upwards orientation, such as when worn on the upper arm.

The detection elements 21,28,29 of Fig.2 each contain a data bus and local processor, such as shown in Fig.1. Similar to the example of Fig.1, two or more detection elements 21, two or more detection elements 28 and/or two or more detection elements 29 may be interconnected via the data bus and possibly to an external controller device.

Two or more detection elements, e.g. when placed in protective casings such as shown in Fig.2, are typically interconnected such that they form a straight line in a single plane. It is possible that the interconnected detection elements follow a different geometrical shape. For example, two (or more) detection elements may be connectable at an angle within a plane, resulting in e.g. a zigzag shaped array of detection elements on the ground. In another example two (or more) detection elements may be connectable at an angle in different planes, resulting in e.g. a three-dimensional zigzag shaped array of vertical detection elements at the side of a track. The protective casing is not necessarily rectangular, such as shown in Fig.2, but may have any shape such as a curved or irregular shape. It is possible that the data bus of two or more detection elements are interconnected via a cable allowing a gap in between detection elements and its protective casings.

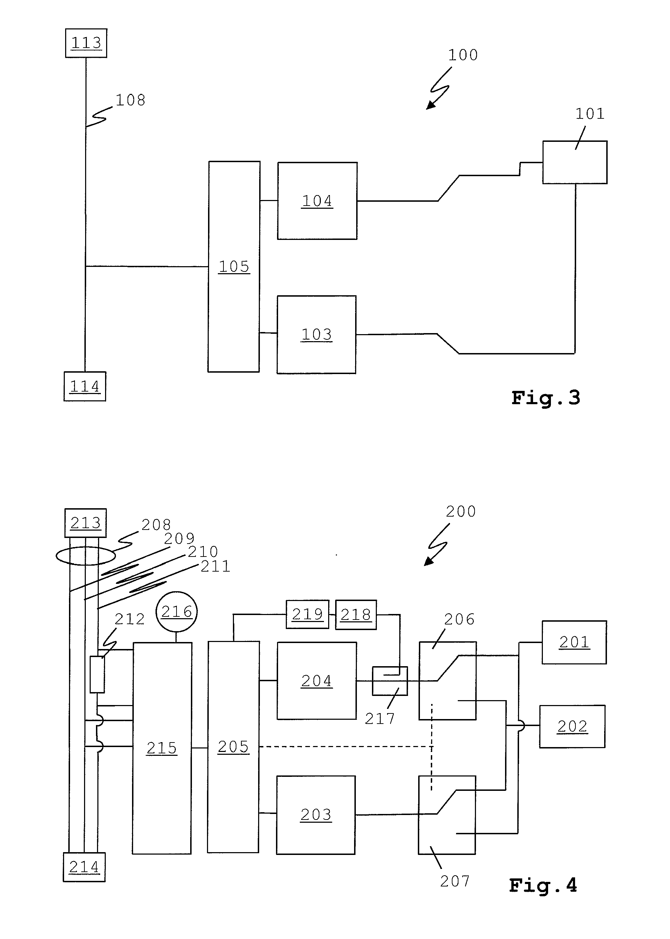

Fig.3 shows a detection element 100 of an exemplary embodiment of the invention. Detection element 100 may be used as detection element 21, 23, 25, 28 or 29 as shown in Fig.1 and Fig.2. One or more antennas 101 are connected to a transmitter circuitry 104 for transmitting a carrier signal, such as a carrier signal 2 shown in Fig.1 or Fig.2. The antenna 101 is further connected to a receiver circuitry 103 for receiving a backscatter signal, such as a backscatter signal 3 shown in Fig.1 or Fig.2, in response to the carrier signal. The signals are typically RFID signals. A microprocessor 105, e.g. in the form of a processor running a computer program stored in a memory (e.g. NVRAM or ROM) or a Field Programmable Gate Array (FPGA) that is hardcoded with the computer program code, may control the transmitter circuitry 104 and receiver circuitry 103 and processed the received backscatter signal. Sports timing data thus obtained by the microprocessor 105 may be put on a data bus 108. Connectors 113,114 enable the data bus 108 of detection element 100 to be connected to the data bus of another detection element or any other device having a connectable data bus.

Fig.4 shows a detection element 200 of another exemplary embodiment of the invention. Detection element 200 may be used as detection element 21, 23, 25, 28 or 29 as shown in Fig.1 and Fig.2. A first antenna 201 and a second antenna 202 are connected to a first cross-over switch 206 and a second cross-over switch 207. The antennas 201,202 may be similar to the antennas 101,102 of Fig.3. The first cross-over switch 206 is connected to a transmitter circuitry 204. The second cross-over switch 207 is connected to a receiver circuitry 203. The transmitter circuitry 204 and the receiver circuitry 203 may be similar to the transmitter circuitry 104 and the receiver circuitry 103 of Fig.3. The cross-over switches 206,207 may be controlled by a microprocessor 205, as depicted by the dashed lines. The microprocessor 205 may be similar to the microprocessor 105 of Fig.3. A microcontroller 215 controls data exchange between a data bus 208 and the microprocessor 205. It is possible that the microcontroller 215 and microprocessor 205 are integrated into a single microcontroller. A local clock 216 provides clock pulses to the microcontroller 215 and possibly to the microprocessor 205. The data bus 208, e.g. in the form of a CAN bus or RS485 bus, may comprise a data line 209 for exchanging data on the data bus 208. The data bus 208 may further comprise or be extended with a power line 210 for providing preferably fixed power to the detection elements connected to the data bus 208. The data bus 208 may further comprise a second power line 211 for providing a variable power to the detection elements connected to the data bus 208. The voltage on the second power line 211 may be varied by a resistor 212 in the second power line 211 or by any other means. The variable power on the power line 211 may be used to identify the detection element in an array of connected detection elements, as will be explained. Conceptionally, a directional coupler 217 may be installed in between the first cross-over switch 206 and the transmitter circuitry 204 and may be connected to a signal comparator 219, possibly via a logarithmic amplifier 218. The comparator 219 may be connected to the microprocessor 205 for processing the output of the comparator 219.

With two antennas in the detection element 200, typically one antenna, in this example antenna 202, operates as a transmit antenna and the other antenna, in this example antenna 201, operates as a receive antenna. By controlling the cross-over switches 206,207 the transmitting/receiving function of the antennas may be switched, both antennas may operate as transmit antennas or both antennas may operate as receive antennas. Separating the receiving and transmitting in separate antennas advantageously minimizes interference between the transmitted signal and the received signal before processing in the microprocessor 205. As a result, receiver sensitivity may be increased. Switching the transmitter/receiving function may be advantageous when e.g. a detuning on the transmitter antenna is detected. Detuning may e.g. occur if a participant steps on the transmitter antenna in the detection mat. In case of detuning the other antenna may be used as transmitter antenna. This may be important as the carrier signal 2 is needed for powering the tag 1. To the reception of the backscatter signal 3 the detuning has a lower impact.

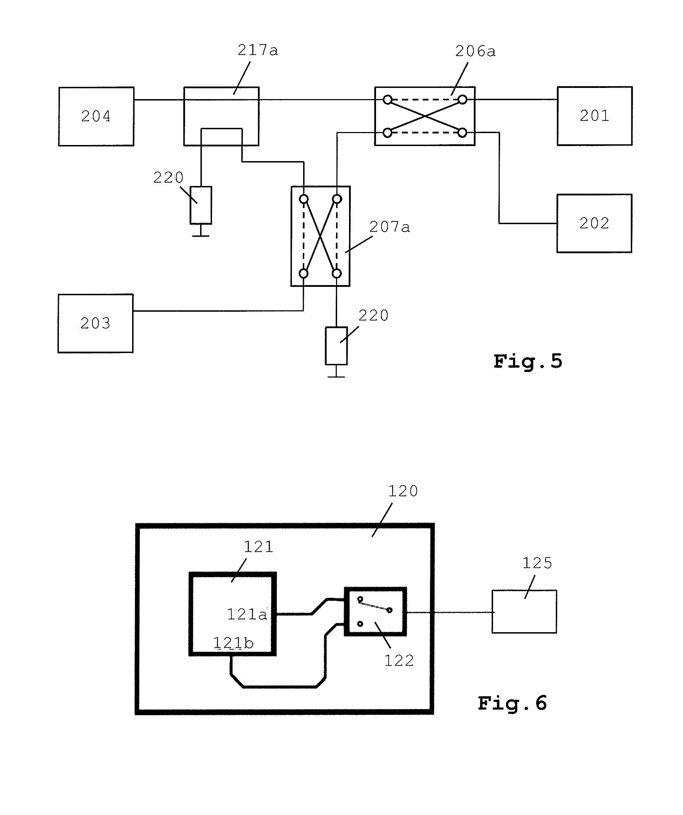

Fig.5 shows an alternative cross-over switch configuration for use in a detection element, such as detection element 200. Antennas 201 and 202, transmitter circuitry 204 and receiver circuitry 203 are similar to those shown in Fig.4. Furthermore, Fig.5 shows a directional coupler 217a, a first cross-over switch 206a and a second cross-over switch 207a. Resistors 220, which are e.g. 50 ohm resistors, connect the directional coupler 217 and the second cross-over switch 207a to ground. The first cross-over switch 206a is used to select either the first antenna 201 or the second antenna 202. The second cross-over switch 207a receives the backscatter signal via the transmit antenna or via the other antenna. In a detection element having only one antenna, the cross-over switches are typically set to receive the backscatter signal via the transmit antenna. In a detection element having two antennas, the function of the antennas may be switched, as explained above.

The microprocessor 205 may be configured to control the output power of the carrier signal, e.g. to lower the power to a safe value or even to zero (i.e. turning off the transmitter) in case of interference or (possibly severe) detuning of the transmitter antenna.

The data bus 208 may be used to exchange data between microprocessors of different detection elements 200 connected to the data bus 208. The data bus 208 may be used to exchange data to a controller device 20 connected to the data bus 208. The controller device 20 may collect registration data as obtained by the microprocessors 205 in the detection elements 200. The collected registration data may be stored in the controller device 20 or forwarded from the controller device 20 to another server via any data communication means.

The controller device 20 may be used to synchronize the detection elements. Hereto control data may be transmitted from the controller device 20 to the detection devices via the data bus. Synchronizing may result in two neighboring detection elements alternating the on/off state of the transmitter antenna or two neighboring detection elements using different transmitting frequencies for the carrier signal. This may avoid two detection elements serving a single tag and processing its backscatter signal. Alternatively or additionally the microprocessor 205 may be configured to synchronize the detection element 200 with one or more neighboring detection elements.

The directional coupler 217 may be used to detect a reflection signal. For example due to an antenna mismatch, a reflection of the carrier signal 2 may be detected on the antenna ports 201,202. This reflection is called the reflection signal. The comparator 219 may be used to determine if the reflection signal is larger at one of the two antennas. The comparison result may then be used by the microprocessor 205 to switch off the antenna with the highest reflection signal. If the power of the reflection signal is too large, the backscatter signal 3 may not be detectable. Disabling the transmission antenna or lowering the transmission power for transmitting the carrier signal 2 may reduce or eliminate the reflection signal, enabling the backscatter signal 3 to be detectable again. The disabling of the transmission antenna or lowering of the transmission power may be a temporary measure. Alternatively the comparison result may trigger the microprocessor 205 to switch the transmitting/receiving function of the two antennas 201,202.

The fixed power line 210 and variable power line 211 may be used to determine a position of the detection element in an array of detection elements and to determine the total number of detection elements in the array. In the following example the fixed power is set to 12V. The first detection element in the array is typically connected to a power supply. Hereto the connector 213 of the first detection element may be connected to the power supply such that the fixed power line 210 is connected to the 12V power supply. Also the variable power line 211 may be connected to the 12V power supply via the connector 213. All detection elements in the array are now effectively connected to the 12V power supply via the fixed power line 210 in the data bus 208. The resistor 212 in each detection element 200 makes the voltage in the variable power line 211 drop. The last detection element in the array typically has a terminator connected to the connector 214 to terminate the data bus 208. The terminator effectively grounds the variable power line 211 to ground in the last detection element of the array.

In the example above the power supply is part of the controller device 20. Alternatively a separate power supply may be used, the power supply may be part of one or more of the detection elements, or the power supply may installed in the protective casing of the detection element.

The microcontroller 215 may calculate the position of the detection element 200 by performing the following calculation: position = V₁/(V₁-V₂). Herein, V₁ is the voltage on the variable power line 211 before the resistor 212, i.e. at the side of connector 213, and V₂ is the voltage on the variable power line 211 after the resistor 212, i.e. at the side to connector 214.

The microcontroller 215 may calculate the total number of detection elements in the array by performing the following calculation: number of detection elements = V_{power/}(V₁-V₂). Herein, V_{power} is the voltage on the fixed power line 210, V₁ is the voltage on the variable power line 211 before the resistor 212, i.e. at the side of connector 213, and V₂ is the voltage on the variable power line 211 after the resistor 212, i.e. at the side to connector 214.

Instead of using a fixed power line 210 in combination with a variable power line 211 and resistor 212, any other electrical means involving any electronic component may be used for detecting fluctuations in one or more power lines and relating these fluctuations to a position in the array and the total number of detection elements in the array.

Fig.6 shows an antenna module 120 of an exemplary embodiment of the invention. The antenna module 120 may be used as antenna 101, 201 and/or 202, as shown in the exemplary figures 3, 4 and 5. The antenna module 120 may contain a ground plane with a patch 121 located thereon. Part of the antenna module 120 is a polarization switch 122 for switching the polarization of the antenna module 120. The antenna module 120 is connected to a part 125 of the detection element. Depending on the configuration the part 125 of the detection element may be receiver circuitry 103, transmitter circuitry 104, receiver circuitry 203, transmitter circuitry 204, cross-over switch 206 or cross-over switch 207, as shown in exemplary figures 3, 4 and 5. Other possible configurations of the detection element are not excluded; the part 125 of the detection element may be any other part of the detection element that may be connected to the antenna module 120. The polarization switch 122 is typically controlled by a microcontroller of the detection element, such as microcontroller 105 or 205. In the example of Fig.6 the polarization is switchable between a horizontal polarization and a vertical polarization on patch ports 121a and 121b, respectively.

Instead of switching between a horizontal and vertical polarization the polarization switch 122 may be configured to switch between other polarizations, such as between linear and circular polarization.

As described above, the data bus may be implemented as a Controller Area Network (CAN) bus. The CAN standard defines a communication network that links all the nodes connected to a bus and enables them to talk with one another. There may or may not be a central control node, and nodes may be added at any time, even while the network is operating (hot-plugging). Unlike a traditional network such as USB or Ethernet, CAN does not send large blocks of data point-to-point from node A to node B under the supervision of a central bus master. In a CAN network, many short messages may be broadcast to the entire network, which provides for data consistency in every node of the system. The CAN communications protocol, ISO-11898: 2003, describes how information is passed between devices on a network and conforms to the Open Systems Interconnection (OSI) model that is defined in terms of layers.

The CAN communication protocol is a carrier-sense, multiple-access protocol with collision detection and arbitration on message priority (CSMA/CD+AMP). CSMA means that each node on a bus must wait for a prescribed period of inactivity before attempting to send a message. CD+AMP means that collisions are resolved through a bit-wise arbitration, based on a preprogrammed priority of each message in the identifier field of a message. The higher priority identifier always wins bus access. That is, the last logic-high in the identifier keeps on transmitting because it is the highest priority. Since every node on a bus takes part in writing every bit "as it is being written," an arbitrating node knows if it placed the logic-high bit on the bus. The ISO-11898:2003 Standard, with a standard 11-bit identifier, provides for signaling rates from 125kbps to 1 Mbps. The standard was later amended with an "extended" 29-bit identifier. The standard 11-bit identifier field provides for 211, or 2048 different message identifiers, whereas the extended 29-bit identifier provides for 229, or 537 million identifiers.

Bus access is typically event-driven and takes place randomly. If two nodes try to occupy the bus simultaneously, access is implemented with a nondestructive, bit-wise arbitration. Nondestructive means that the node winning arbitration just continues on with the message, without the message being destroyed or corrupted by another node. The allocation of priority to messages in the identifier is a feature of CAN that makes it particularly attractive for use within a real-time control environment. The lower the binary message identifier number, the higher its priority. An identifier consisting entirely of zeros is the highest priority message on a network because it holds the bus dominant the longest. Therefore, if two nodes begin to transmit simultaneously, the node that sends a last identifier bit as a zero (dominant) while the other nodes send a one (recessive) retains control of the CAN bus and goes on to complete its message. A dominant bit typically overwrites a recessive bit on a CAN bus.

The robustness of CAN may be attributed in part to its abundant error-checking procedures. The CAN protocol incorporates five methods of error checking: three at the message level and two at the bit level. If a message fails any one of these error detection methods, it is not accepted and an error frame is generated from the receiving node. This forces the transmitting node to resend the message until it is received correctly. However, if a faulty node hangs up a bus by continuously repeating an error, its transmit capability is removed by its controller after an error limit is reached. Error checking at the message level is enforced by CRC and ACK slots. The 16-bit CRC contains the checksum of the preceding application data for error detection with a 15-bit checksum and 1-bit delimiter. The ACK field is two bits long and consists of the acknowledge bit and an acknowledge delimiter bit. Also at the message level there can be a form check. This check looks for fields in the message which must always be recessive bits. If a dominant bit is detected, an error is generated. The bits checked are the SOF, EOF, ACK delimiter, and the CRC delimiter bits. At the bit level, each bit transmitted is monitored by the transmitter of the message. If a data bit (not arbitration bit) is written onto the bus and its opposite is read, an error is generated. The only exceptions to this are with the message identifier field which is used for arbitration, and the acknowledge slot which requires a recessive bit to be overwritten by a dominant bit. The final method of error detection is with the bit-stuffing rule where after five consecutive bits of the same logic level, if the next bit is not a complement, an error is generated. Stuffing ensures that rising edges are available for on-going synchronization of the network. Stuffing also ensures that a stream of bits are not mistaken for an error frame, or the seven-bit interframe space that signifies the end of a message. Stuffed bits are removed by a receiving node's controller before the data is forwarded to the application. With this logic, an active error frame consists of six dominant bits-violating the bit stuffing rule. This is interpreted as an error by all of the CAN nodes which then generate their own error frame. This means that an error frame can be from the original six bits to twelve bits long with all the replies. This error frame is then followed by a delimiter field of eight recessive bits and a bus idle period before the corrupted message is retransmitted. It is important to note that the retransmitted message still has to contend for arbitration on the bus.

One embodiment of the invention may be implemented as a program product for use with a computer system. The program(s) of the program product define functions of the embodiments (including the methods described herein) and can be contained on a variety of computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory or flash memory) on which alterable information is stored. Moreover, the invention is not limited to the embodiments described above, which may be varied within the scope of the accompanying claims.

## Claims

1. A sports timing detection element based on backscattering modulation, preferably RFID backscattering modulation in the UHF band, the detection element comprising at least one antenna, a receiver circuitry, a transmitter circuitry and a microprocessor, wherein the microprocessor is configured to:
activate the transmitter circuitry for transmitting a carrier signal via the at least one antenna; and
process a backscatter signal received via the at least one antenna and the receiver circuitry in response to the carrier signal,
the detection element further comprising a data bus for exchanging data with a further detection element.

2. The detection element according to claim 1, further comprising a polarization switch to switch the polarization of an antenna, such as between a horizontal polarization and a vertical polarization or between a linear and a circular polarization.

3. The detection element according to claim 1 or 2, comprising a first antenna and a second antenna, wherein the detection element is configured to transmit the carrier signal via the first antenna and to receive the backscatter signal via the second antenna.

4. The detection element according to claim 3, further comprising a cross-over switch to switch between the first antenna and the second antenna for transmitting the carrier signal.

5. The detection element according to claim 3 or 4, wherein the detection element is configured to receive the backscatter signal via the first antenna and the second antenna.

6. The detection element according to any one of the claims 3-5, further comprising a comparator module configured to with a second reflection signal received via the second antenna to obtain a comparison result, and wherein the microprocessor is further configured to, based on the comparison result,
switch off one of the first antenna and the second antenna for transmitting the carrier signal, or
lower a transmission power for transmitting the carrier signal via one of the first antenna and the second antenna.

7. The detection element according to any one of the preceding claims, further comprising a microcontroller that is configured to determine an identity of the detection element.

8. The detection element according to claim 7, wherein the data bus comprises one or more power lines, and wherein the microcontroller is configured to determine the identity based on a measurement result obtained by measuring the one or more power lines.

9. The detection element according to claim 8 comprising a first power line, wherein the measuring comprises detecting a voltage drop over a resistor in the first power line.

10. The detection element according to claim 9 further comprising a second power line, wherein the microcontroller is configured to receive substantially a fixed power via the second power line for powering the detection element, and wherein, when the detection element is part of an array of serially connected detection elements that are interconnected via the data bus, the microcontroller is configured to determine a number of detection elements in the array based on the voltage drop and the voltage of the fixed power.

11. The detection element according to any one of the preceding claims, wherein the detection element is placed in a protective casing to form one of a sports timing detection mat, a vertically oriented sports timing detection element and an overhead sports timing detection element.

12. An array of two or more sports timing detection elements according to any one of the claims 1-11, wherein two detection elements are connected via the data bus, and wherein the data busses together preferably form a serial data bus.

13. The array according to claim 12, wherein a detection element is configured to switch off the transmitter circuitry of said detection element based on a signal received from another detection element.

14. A sports timing detection system comprising the array of sports timing detection elements according to claim 12 or 13, and comprising the controller device connected to one of the detection elements in the array via the data bus of the one of the detection elements.

15. The detection system according to claim 14,
wherein the controller device is configured to switch on or switch off one or more detection elements in the array.

16. The detection system according to claim 14 or 15, wherein the controller device is configured to set the transmission frequency of the carrier signal of one or more of the detection elements in the array.

17. The detection system according to any one of the claims 14-16, further comprising a power supply for providing power to the array via the data bus, wherein the power supply is a part of the controller device or a part of one or more of the sports timing detection elements in the array.
